# EUROPÄISCHE PATENTSCHRIFT

(11) **EP 3 768 988 B1**
(45) Veröffentlichungstag und Bekanntmachung des Hinweises auf die Patenterteilung: **09.02.2022**
(21) Anmeldenummer: 18833156.5
(22) Anmeldetag: 17.12.2018
(51) Int. Cl.: F16F 15/12, F16F 15/14

(54) **TILGEREINRICHTUNG SOWIE DREHMOMENTÜBERTRAGUNGSEINRICHTUNG**
VIBRATION ABSORBER DEVICE AND TORQUE TRANSMISSION DEVICE
DISPOSITIF AMORTISSEUR DE VIBRATIONS AINSI QUE DISPOSITIF DE TRANSMISSION DE COUPLE

(30) Priorität: 19.03.2018 DE 102018106274
(43) Veröffentlichungstag der Anmeldung: 27.01.2021
(73) Patentinhaber: Schaeffler Technologies AG & Co. KG, 91074 Herzogenaurach (DE)
(72) Erfinder: DINGER, Christian, 77855 Achern (DE)
(86) Internationale Anmeldenummer: PCT/DE2018/101024
(87) Internationale Veröffentlichungsnummer: WO 2019/179547

(56) Entgegenhaltungen:
- EP-A1- 3 385 568
- DE-A1-102014 210 685
- GB-A- 2 156 477

## Beschreibung

Die vorliegende Erfindung betrifft eine Tilgereinrichtung für eine Drehmomentübertragungseinrichtung für einen Antriebsstrang eines Fahrzeugs, insbesondere eines Kraftfahrzeugs. Ferner betrifft die Erfindung eine Drehmomentübertragungseinrichtung, ein Getriebe, eine Kupplung oder einen Dämpfer für einen Antriebsstrang eines Fahrzeugs, insbesondere eines Kraftfahrzeugs.

An einer Welle einer periodisch arbeitenden Maschine, z. B. an einer Kurbelwelle eines Verbrennungsmotors eines Kraftahrzeugs, treten bei einer Rotationsbewegung der Kurbelwelle Drehschwingungen auf, wobei sich deren Frequenzen mit einer Drehzahl der Kurbelwelle ändern. Durch Verbrennungsvorgänge im Verbrennungsmotor werden insbesondere in einem Zugbetrieb Drehschwingungen im Antriebsstrang des Kraftfahrzeugs angeregt. Zur Verringerung dieser Drehschwingungen kann eine Tilgereinrichtung wie z. B. eine Fliehkraftpendeleinrichtung oder eine Ringtilgereinrichtung vorgesehen sein, welche die Drehschwingungen über einen größeren Drehzahlbereich des Verbrennungsmotors, idealerweise über dessen gesamten Drehzahlbereich hinweg, hauptsächlich oder im Wesentlichen tilgen kann.

Einer Fliehkraftpendeleinrichtung liegt das physikalische Prinzip zugrunde, dass deren Tilgermassen fliehkraftbedingt bestrebt sind, eine Rotationsachse, z. B. die der Kurbelwelle (siehe oben), bei Einleitung einer Rotationsbewegung um die Rotationsachse in einem größtmöglichen Abstand zu umkreisen. Bei einer Ringtilgereinrichtung erfolgt eine Tilgungswirkung von einem umfänglich beweglichen Tilgerring, welcher von radial beweglichen Tilgermassen (Schwingen) bevorzugt über Rollen in einer Kurvenbahn antreibbar ist. Ein Vorteil einer Ringtilgereinrichtung ist eine Bauraumausnutzung, welche es erlaubt den Tilgerring als Massering in radial begrenzte Bauräume zu integrieren.

Als Stand der Technik wird auf die DE 10 2014 210 685 A1 und die GB 2 156 477 A verwiesen, aus denen eine Tilgereinrichtung hervorgeht, die auf den Oberbegriff des Anspruchs 1 lesbar ist.

Aufgrund eines Kostendrucks und eines angeforderten erhöhten Leistungsverhaltens bei permanent kleiner werdenden Bauräumen in den Antriebssträngen von Kraftfahrzeugen treten zunehmend Angelegenheiten in einen Fokus der Entwickler, welche bis dato nur geringfügige bzw. einfach zu behebende Probleme verursachten. Es ist daher eine Aufgabe der Erfindung, eine vergleichsweise kleine aber dennoch vergleichsweise leistungsfähige Tilgereinrichtung anzugeben. Hierbei soll wenig Bauraum in Anspruch genommen werden, wobei die Tilgereinrichtung kostengünstig in ihrer Herstellung, ihrer Montage, ihrer Wartung und/oder in ihrem Betrieb sein soll. Des Weiteren ist es eine Aufgabe der Erfindung, eine entsprechende Drehmomentübertragungseinrichtung anzugeben.

Die Aufgabe der Erfindung ist mittels einer Tilgereinrichtung für eine Drehmomentübertragungseinrichtung für einen Antriebsstrang eines Fahrzeugs, insbesondere eines Kraftfahrzeugs; und mittels einer Drehmomentübertragungseinrichtung, eines Getriebes, einer Kupplung oder eines Dämpfers für einen Antriebsstrang eines Fahrzeugs, insbesondere eines Kraftfahrzeugs; gemäß den unabhängigen Ansprüchen gelöst. - Vorteilhafte Weiterbildungen, zusätzliche Merkmale und/oder Vorteile der Erfindung ergeben sich aus den abhängigen Ansprüchen und/oder der folgenden Beschreibung.

Die erfindungsgemäße Tilgereinrichtung umfasst einen Tilgerflansch, einen Tilgerring und eine Mehrzahl von Tilgermassen, mittels welchen der Tilgerring mit dem Tilgerflansch mechanisch gekoppelt ist und wodurch eine Rotationsbewegung vom Tilgerflansch auf den Tilgerring und vice versa übertragbar ist, wobei zwei in Umfangsrichtung der Tilgereinrichtung direkt zueinander benachbart angeordnete Tilgermassen mittels einer Feder mechanisch gekoppelt sind. D. h. die Tilgereinrichtung ist aufgrund des teilweise oder vollständig umlaufenden Tilgerrings auch als eine Ringtilgereinrichtung bezeichenbar. Mittels der Feder kann ein ,Herunterfallen' der Tilgermassen bei geringen Drehzahlen vermieden und/oder eine Fliehkraft der Tilgermassen durch eine Federkraft aus der Feder verstärkt werden.

Zwei in Umfangsrichtung direkt zueinander benachbart angeordnete Tilgermassen sind mittels einer Feder mechanisch paarweise gekoppelt. D. h. neben zwei über eine Feder mechanisch gekoppelte Tilgermassen, also ein Paar von Tilgermassen, kann sich in Umfangsrichtung rechts/negativ/Uhrzeigersinn und links/positiv/Gegenuhrzeigersinn jeweils eine Tilgermasse befinden, die nicht mit dem Paar von Tilgermassen mechanisch über eine Feder gekoppelt sind. - Die Feder kann derart dimensioniert und die Tilgereinrichtung derart ausgebildet sein, dass die zwei betreffenden, direkt zueinander benachbart angeordneten Tilgermassen in einer Ruhelage der Tilgereinrichtung, mittels der Feder mechanisch vorgespannt in der Tilgereinrichtung eingerichtet sind. Hierdurch lässt sich, neben obigen Vorteilen, zusätzlich eine Spielüberbrückung innerhalb der Tilgereinrichtung realisieren, was sich ferner positiv auf einen Verschleiß innerhalb der Tilgereinrichtung auswirken kann.

Die Feder kann derart dimensioniert und derart in der Tilgereinrichtung eingerichtet sowie die Tilgereinrichtung derart ausgebildet sein, dass die Feder die Tilgermassen radial nach außen drückt und/oder ein Herunterfallen der Tilgermassen bei vergleichsweise geringen Drehzahlen vermieden ist. Vergleichsweise geringe Drehzahlen sind z. B. 0%-5% bis über 10%-20% einer Maximaldrehzahl. Ferner kann die Feder in ihrem Mittenbereich an/in der Tilgereinrichtung aufgehängt oder gelagert sein. Des Weiteren kann der Tilgerflansch eine Aufhängung oder ein Lager aufweisen, mittels welcher oder welchem die Feder am/im Tilgerflansch aufgehängt oder gelagert ist. Darüber hinaus kann an/auf/in einer/der Aufhängung oder an/auf/in einem/dem Lager die Feder mechanisch vorgespannt in der Tilgereinrichtung eingerichtet sein.

In einer erfindungsgemäßen Ausführungsform ist innerhalb der Tilgereinrichtung die Feder an/auf/in einer/der Aufhängung oder an/auf/in einem/dem Lager des Tilgerflanschs aufgehängt oder gelagert, wobei in Umfangsrichtung an/auf/in beiden Längsendabschnitten der Feder jeweils eine Tilgermasse an die Feder mechanisch, insbesondere gelenkig, angekoppelt ist. Die Aufhängung oder das Lager des Tilgerflanschs kann als ein Radialfortsatz des Tilgerflanschs ausgebildet sein, wobei die Feder mit ihrem Mittenbereich bevorzugt an einer radialen Außenseite des Radialfortsatzes ansitzt. Ferner kann in Umfangsrichtung von einem ungebundenen, also freien, Endabschnitt einer Tilgermasse kommend, die Feder räumlich vor einer mechanischen und/oder gelenkigen Koppelung der betreffenden Tilgermasse mit dem Tilgerflansch, mit der Feder mechanisch und/oder gelenkig gekoppelt sein.

In einer Ausführungsform kann an wenigstens einem Längsendabschnitt der Feder eine Lagerfläche für eine/die gelenkige Koppelung mit einer Tilgermasse vorgesehen sein. Hierbei kann die Lagerfläche einstückig oder stofflich einstückig mit der Feder verbunden oder integral mit der Feder ausgebildet sein. Ferner kann die Feder bevorzugt als eine einlagige Biegefeder ausgebildet sein, wobei ein jeweiliger Längsendabschnitt der Feder gelenkig mit der dort befindlichen betreffenden Tilgermasse gekoppelt ist. Hierbei kann die Biegefeder als eine bevorzugt einlagige Blattfeder, eine bevorzugt einlagige Elliptikfeder, insbesondere Halbelliptikfeder, ausgebildet sein. Hierbei muss eine Mittellängslage (Umfangsrichtung) der Biegefeder nicht unbedingt einem Ellipsenabschnitt gleichen, ein Parabelabschnitt oder ähnliches ist natürlich anwendbar.

In einer Ausführungsform kann eine/die mechanische Koppelung der Feder mit einer Tilgermassen mittels eines/des Gelenks, insbesondere eines Drehgelenks, erfolgen. Hierbei kann eine Drehachse des Drehgelenks in Axialrichtung der Tilgereinrichtung verlaufen. Ferner kann die Lagerfläche des Gelenks in dieselbe Richtung wie die Feder oder Biegefeder gekrümmt sein. Des Weiteren kann die Lagerfläche des Gelenks und die Feder oder Biegefeder in entgegengesetzte Richtungen gekrümmt sein. Darüber hinaus kann die Feder derart ausgelegt sein, dass sie in der Ruhelage der Tilgereinrichtung wenigstens die Gewichtskraft der beiden an ihr angekoppelten Tilgermassen abstützt.

In einer Ausführungsform können die Tilgermassen in Radialrichtung der Tilgereinrichtung schwenkbar am Tilgerflansch gelagert sein, und/oder die Tilgereinrichtung derart ausgebildet sein, dass der Tilgerring bei einer Bewegung der Tilgermassen in Radialrichtung, eine Relativdrehbewegung gegenüber dem Tilgerflansch durchführt. Der Tilgerring ist gegenüber den radial schwenkbaren Tilgermassen bevorzugt mittels Rollen in Kurvenbahnen gelagert. Die Kurvenbahnen sind dabei innerhalb einer betreffenden Tilgermasse und einem zugehörigen Bereich im Tilgerring bevorzugt gegensinnig gekrümmt eingerichtet.

In einer Ausführungsform können die Tilgermassen als Tilgerschwingen ausgebildet sein, wobei jeweils eine einzelne Tilgerschwinge lediglich mit einem einzigen Umfangsendabschnitt mit dem Tilgerflansch mechanisch gekoppelt ist, und/oder diese Tilgerschwinge abseits dieses Umfangsendabschnitts mit dem Tilgerring mechanisch gekoppelt ist. Letzteres kann (vgl. oben), wie bei herkömmlichen Fliehkraftpendeleinrichtungen, mit wenigstens einer Rolle und entsprechenden, bevorzugt gegensinnig gekrümmten, Rollenausbrüchen in der betreffenden Tilgerschwinge und dem Tilgerring erfolgen. - Die Tilgermassen bzw. Tilgerschwingen können als monofilare Tilgermassen bzw. Tilgerschwingen oder als bifilare Tilgermassen bzw. Tilgerschwingen ausgebildet sein.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein, wobei ein negatives Merkmal als Merkmal nicht explizit erläutert ist, wenn nicht gemäß der Erfindung Wert daraufgelegt ist, dass es abwesend ist, also die Erfindung darin besteht, dieses Merkmal wegzulassen. Ein Merkmal dieser Spezifikation (Beschreibung, Bezugszeichenliste, Patentansprüche, Zeichnung) kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal, bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale dieser Spezifikation sind (angesichts des (meist unbekannten) Stands der Technik) auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung, Sektion etc.), wodurch, z. B. unter Beachtung von Gleichwirkung und/oder Gleichwertigkeit, eine Verallgemeinerung eines oder dieses Merkmals möglich ist.

Abschnitte, Elemente, Bauteile, Einheiten, Schemata und/oder Komponenten, welche eine identische, univoke oder analoge Ausbildung und/oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

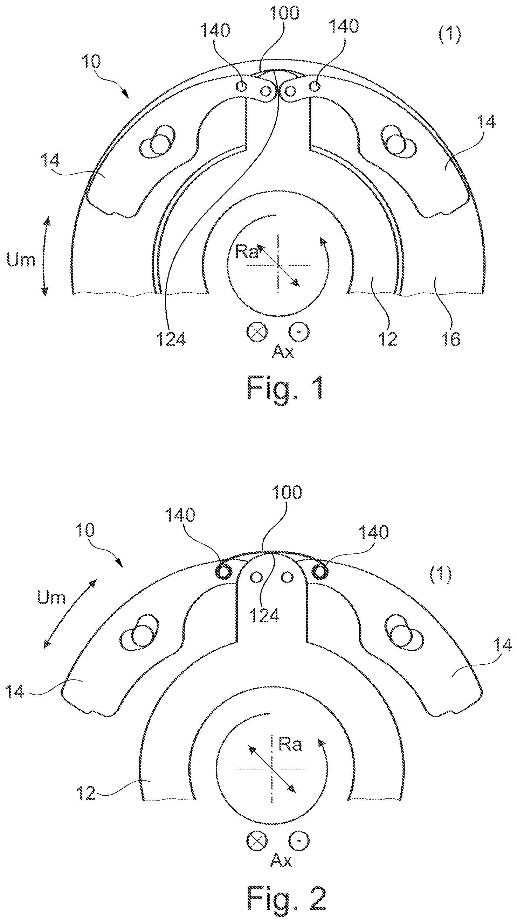

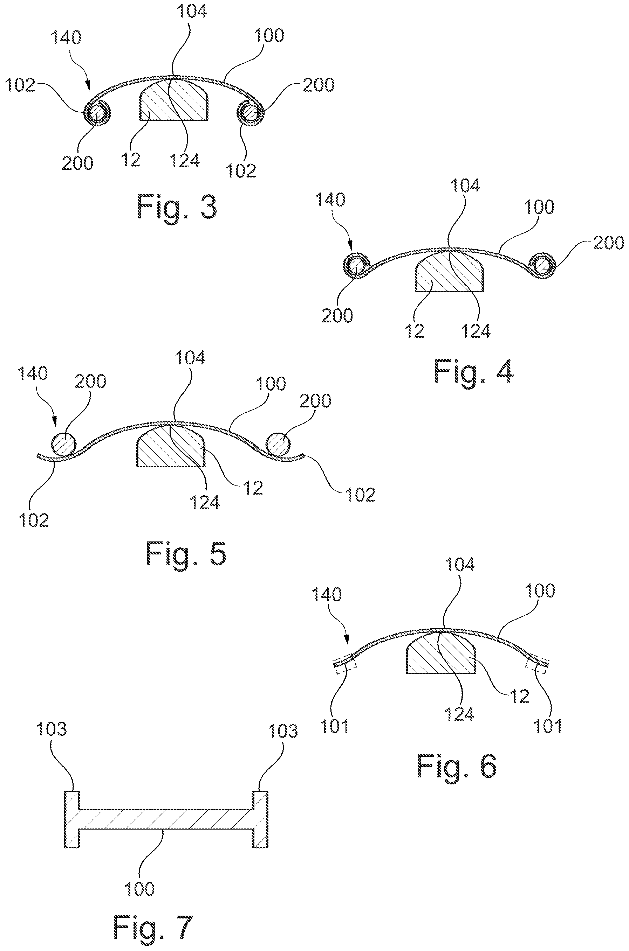

Die Erfindung ist im Folgenden anhand von Ausführungsbeispielen (Fig. 3 bis 7) einer Ausführungsform (Fig. 1 und 2) einer Variante einer als Ringtilgereinrichtung 10 ausgebildeten Tilgereinrichtung 10 für ein Fahrzeug, insbesondere einen Antriebsstrang eines Kraftfahrzeugs mit Verbrennungsmotor, näher erläutert. Die Erfindung ist jedoch nicht auf eine solche Variante, solche Ausführungsformen und/oder die nachfolgend erläuterten Ausführungsbeispiele beschränkt, sondern ist von grundlegenderer Natur, sodass die Erfindung auf andere Tilgereinrichtungen oder Ringtilgereinrichtungen im Sinne der Erfindung angewendet werden kann.

In der Zeichnung sind nur diejenigen räumlichen Abschnitte des Gegenstands der Erfindung dargestellt, welche für ein Verständnis der Erfindung notwendig sind. Obwohl die Erfindung detaillierter durch bevorzugte Ausführungsbeispiele näher beschrieben und illustriert ist, so ist die Erfindung nicht durch die offenbarten Ausführungsbeispiele eingeschränkt. Andere Variationen können hieraus und/oder aus Obigem (Erfindungsbeschreibung) abgeleitet werden, ohne den Schutzumfang der Erfindung zu verlassen.

Die Erläuterung der Erfindung anhand der Fig. der Zeichnung bezieht sich im Folgenden auf eine Axialrichtung Ax, eine Rotationsachse Ax, eine Radialrichtung Ra und eine Umfangsrichtung Um einer erfindungsgemäßen Drehmomentübertragungseinrichtung 1 und der erfindungsgemäßen Tilgereinrichtung 10. Diese Lageangaben können sich z. B. auch auf eine Kurbelwelle eines Verbrennungsmotors, einen Antriebsstrang eines Kraftfahrzeugs etc. bezogen werden. Die Erfindung ist dabei auf alle Antriebsstränge von beliebigen Fahrzeugen, insbesondere auf Dämpfer in Wandlern, Getrieben, Kupplungen etc. anwendbar. Weitere Anwendungen der Erfindung sind in der Bezugszeichenliste angegeben.

Die Fig. 1 und 2 zeigen jeweils unten weggebrochen eine Stirnseite einer Tilgereinrichtung 10 mit einem Tilgerflansch 12, einer Mehrzahl von Tilgermassen 14 und einem Tilgerring 16, wobei in der Fig. 2 der Tilgerflansch 12 nicht dargestellt ist. Hierbei kann der Tilgerflansch 12 teilweise oder vollständig in Umfangsrichtung Um umlaufend in der Tilgereinrichtung 10 eingerichtet sein. Eine Tilgermasse 14 kann z. B. als eine monofilare oder eine bifilare Tilgermasse 14 ausgebildet sein, wobei die betreffende Tilgermasse 14 auch als Tilgerschwinge 14 oder Trägheitsmasse 14 bezeichenbar ist. Eine Tilgermasse 14 (monofilare) bzw. eine Tilgermassenhälfte (bifilar) einer Tilgermasse 14 ist bevorzugt stofflich einstückig oder integral ausgebildet. Ferner ist der Tilgerring 16 auch als Trägheitsmasse 16 bezeichenbar.

Der Tilgerflansch 12 der Tilgereinrichtung 10 weist innen eine ringförmige Basis auf, von welchem sich ein Radialfortsatz radial Ra wegerstreckt. Eine radiale Ra Außenseite Radialfortsatzes bildet eine Aufhängung 124 oder ein Lager 124 für eine erfindungsgemäße Feder 100. - Radial Ra über bzw. außerhalb der ringförmigen Basis des Tilgerflanschs 12 weist die Tilgereinrichtung 10 den sich teilweise oder vollständig in Umfangrichtung erstreckenden Tilgerring 16 auf. Hierbei ist der Tilgerring 16 in Axialrichtung Ax versetzt zum Radialfortsatz des Tilgerflanschs 12 eingerichtet. Hierbei überdecken sich der Radialfortsatz und der Tilgerring 16 Axialrichtung Ax.

An den beiden Umfangsseiten Um (rechts/negativ/Uhrzeigersinn und links/positiv/Gegenuhrzeigersinn) des Radialfortsatzes ist jeweils eine Tilgerschwinge 14 in Radialrichtung Ra schwenkbar vorgesehen, was bevorzugt mittels eines Drehgelenks erfolgt (z. B. Bohrungen in Radialfortsatz und Tilgerschwinge 14 plus Bolzen). D. h. die beiden Tilgerschwingen 14 stehen in Umfangsrichtung Um rechts und links vom Radialfortsatz ab, wobei die Tilgerschwingen 14 eine Rotationsbewegung in Umfangsrichtung Um aufgrund einer Rotationsbewegung des Tilgerflanschs 12 (Radialfortsatz) und eine Schwenkbewegung in Radialrichtung Ra aufgrund einer Fliehkraft und der Drehgelenke durchführen können.

Die Tilgerschwingen 14 sind mit dem Tilgerring 16 mechanisch gekoppelt. Dies erfolgt bevorzugt über Kurvenbahnen im Tilgerring 16, jeweils wenigstens einer Kurvenbahn in einer betreffenden Tilgerschwinge 14 und einer entsprechenden Anzahl von Rollen. Die Kurvenbahnen sind dabei innerhalb einer betreffenden Tilgerschwinge 14 (vgl. die Fig. 1 und 2) und einem zugehörigen Bereich im Tilgerring 16 (nicht dargestellt) bevorzugt gegensinnig gekrümmt eingerichtet. Dies ist z. B. von Fliehkraftpendeleinrichtungen bekannt.

Hierdurch erhält man eine drehzahladaptive Tilgereinrichtung 10, wobei die Tilgungswirkung der Tilgerring 16 übernimmt, welcher von den radial beweglichen Tilgerschwingen 14 antreibbar ist (Tilgerflansch 12 (Radialfortsatz) => gelenkige Verbindung von Radialfortsatz und Tilgerschwingen 14 => Tilgerschwingen 14 mit Kurvenbahnen => Rollen => Kurvenbahnen von Tilgerring 16). Bei einer Tilgung läuft der Tilgerring 16 dem Tilgerflansch 12 vor oder nach, wobei eine Kraft in Umfangsrichtung Um vom Tilgerring 16 in den Tilgerflansch 12 bzw. vom Tilgerflansch 12 in den Tilgerring 16 übertragbar ist.

Bevorzugt sind eine Mehrzahl, insbesondere zwei, drei, vier oder mehr, solcher Drehmomentübertragungsvorrichtungen (Radialfortsatz, zwei Tilgerschwingen 14 plus Bereich im Tilgerring 16 (ohne Kleinteile/-einrichtungen/-vorrichtungen)) in der Tilgereinrichtung 10 eingerichtet (nicht dargestellt). - Gemäß der Erfindung sind die zu einem einzelnen Radialfortsatz gehörenden, zwei in Umfangsrichtung Um hintereinander angeordneten Tilgerschwingen 14 mittels der erfindungsgemäßen Feder 100 mechanisch gekoppelt. Hierbei kann die Feder 100 z. B. als eine Biegefeder 100, eine Blattfeder 100, eine (Halb-)Elliptikfeder 100, eine Federspange 100 etc. ausgebildet sein.

Hierbei ist die Feder 100 zwischen den zwei in Umfangsrichtung Um direkt zueinander benachbart liegenden Tilgerschwingen 14 vorgesehen und mit ihrem jeweiligen Längsendabschnitt 102 mit dem betreffenden gebundenen (mechanische und/oder gelenkige Koppelung der betreffenden Tilgerschwinge 14 mit dem Tilgerflansch 12 / Radialfortsatz) Längsendabschnitt der beiden Tilgerschwingen 14 mechanisch und/oder gelenkig gekoppelt. Die betreffenden gebundenen Längsendabschnitte der beiden Tilgerschwingen 14 sind dabei in Umfangsrichtung Um einander zugewandt.

Die mechanische und/oder gelenkige Koppelung der Feder 100 mit der betreffenden Tilgerschwinge 14 erfolgt bevorzugt mittels eines Gelenks 140, insbesondere eines Drehgelenks 140, dessen Drehachse Ax bevorzugt in Axialrichtung Ax verläuft. Solch ein Drehgelenk 140 besteht z. B. in einer Bohrung in der betreffenden Tilgerschwinge 14 (gebundener Längsendabschnitt) einem Durchgang (Fig. 3 und 4) oder einer Lagerfläche (Fig. 5) im jeweiligen Längsendabschnitt 102 der Feder 100, und einem Stift 200 oder einem (Verbindungs-)Bolzen 200, der durch die Bohrung und den Durchgang hindurchgesteckt ist bzw. durch die Bohrung hindurchgesteckt ist und an der Lagerfläche ansitzt. - In einem Mittenbereich 104 der Feder 100 ist die Feder 100 an/auf/in der Tilgereinrichtung 10 aufgehängt oder gelagert.

Ein solches Aufhängen oder Lagern der Feder 100 erfolgt bevorzugt mit der radialen Ra Außenseite des Radialfortsatzes (Aufhängung 124 oder Lager 124). Vorliegend ist dies derart gelöst, dass der Mittenbereich 104 an dem Radialfortsatz radial Ra außen ansitzt. Durch die Abstützung am Radialfortsatz werden die beiden Tilgerschwingen 14 radial Ra nach außen drückt und so ein Herunterfallen der Tilgerschwingen 14 bei vergleichsweise geringen Drehzahlen vermieden. Hierbei sollte die Feder 100 wenigstens eine Gewichtskraft der beiden Tilgerschwingen 14 abstützen.

Eine Realisierung einer mechanischen und/oder gelenkigen Verbindung zwischen der Feder 100 und den beiden Tilgerschwingen 14 kann auf vielfältige Weisen erfolgen, wovon die Fig. 3 bis 7 eine Auswahl dargestellt. Bevorzugt ist dabei, dass ein betreffender Längsendabschnitt der Feder 100 in (Fig. 3) oder gegen (Fig. 4 bis 6) eine Krümmungsrichtung der Feder 100 um mehr als 180°-270° umgebogen ist (Durchgang in der Feder 100), wobei der Stift 200 oder der (Verbindungs-)Bolzen 200 durch diesen Durchgang hindurchgesteckt werden kann.

Ferner kann eine Lagerschale (Fig. 3) Anwendung finden auf/in welcher der Stift 200 oder der (Verbindungs-)Bolzen 200 in der Tilgereinrichtung 10 bevorzugt vorgespannt ansitzt. Des Weiteren ist es möglich, die beiden Tilgerschwingen 14 in Einhängeausbrüche 101 (Fig. 6, nicht dargestellt, lediglich Position verdeutlicht) der Feder 100 einzuhängen. Darüber hinaus ist es möglich, die Feder 100 mit daran vorgesehenen Einhängelaschen 103 (Fig. 7) in Ausbrüche (nicht dargestellt) an den beiden Tilgerschwingen 14 einzuhängen.

### Bezugszeichenliste

- 1: Drehmomentübertragungseinrichtung für ein Fahrzeug, insbesondere einen Antriebsstrang eines Kraftfahrzeugs (Personenkraftwagen, Personentransportwagen, ATV (All Terrain Vehicle, Geländefahrzeug), Zweirad, Trike, Quad, Nutzfahrzeug, (Schwerst-)Lastkraftwagen, Baufahrzeug, Baumaschine, Sonderfahrzeug etc., mit Verbrennungsmotor, z. B. Benzin-/Diesel- und/oder Elektromotor) - z. B.: (hydrodynamischer) (Drehmoment-)Wandler, (Stufenlos-/Automatik-/ Schalt-)Getriebe, (Mehrfach-/Doppel-/Einfach-)Kupplungsgetriebe, (axiale/radiale) (nass/trocken laufende) (Mehrfach-/Doppel-/Einfach- / Reib-/Lamellen-/ Mehr-/Zwei-/Einscheiben-) (Wandler-/Anfahr-/Lastschalt-/Teil-)Kupplung, und/ oder Zweimassenwandler/-schwungrad, mit (mehr-/zwei-/einstufigem) (mehr-/ zwei-/einreihigem) (Mehrfach-/Doppel-/Einfach-)Dämpfer(-einrichtung), z. B. Torsionsschwingungsdämpfer, und/oder ggf. mit (Einfach-/Doppel-/Mehrfach-) Tilger(-einrichtung); oder Baugruppe und/oder Kombination davon

- 10: Tilgereinrichtung, Ringtilgereinrichtung, Einrichtung zur drehzahladaptiven Schwingungstilgung, monofilar/bifilar
- 12: Tilgerflansch, teilweise oder vollständig in Umfangsrichtung Um umlaufend
- 14: Tilgermasse, Tilgerschwinge, Trägheitsmasse, monofilar/bifilar
- 16: Tilgerring, Trägheitsmasse

- 100: Feder, Biegefeder, Blattfeder, (Halb-)Elliptikfeder, Federspange
- 102: Längsendabschnitt der Feder 100
- 103: Einhängelasche der Feder 100
- 104: Mittenbereich der Feder 100
- 124: Aufhängung, Lager für Feder 100
- 140: Gelenk, Drehgelenk zwischen Tilgermasse 14 und Feder 100
- 200: Stift, (Verbindungs-)Bolzen
- Ax: Axialrichtung, Längsrichtung, Rotationsachse der Kurbelwelle, des Antriebsstrangs, der Drehmomentübertragungseinrichtung 1, der Tilgereinrichtung 10 etc., axial, Axialebene
- Ra: Radialrichtung der Kurbelwelle, des Antriebsstrangs, der Drehmomentübertragungseinrichtung 1, der Tilgereinrichtung 10 etc., radial, Radialebene
- Um: Umfangsrichtung, Umfang der Kurbelwelle, des Antriebsstrangs, der Drehmomentübertragungseinrichtung 1, der Tilgereinrichtung 10 etc., (Relativ-) Drehbewegungen bzw. Rotationsbewegungen finden im Umfangsrichtung Um statt, tangential, Tangentialebene

## Patentansprüche

1. Tilgereinrichtung (10) für eine Drehmomentübertragungseinrichtung (1) für einen Antriebsstrang eines Fahrzeugs, insbesondere eines Kraftfahrzeugs, mit
einem Tilgerflansch (12), einem Tilgerring (16) und einer Mehrzahl von Tilgermassen (14), mittels welchen der Tilgerring (12) mit dem Tilgerflansch (12) mechanisch gekoppelt ist und wodurch eine Rotationsbewegung (Um) vom Tilgerflansch (12) auf den Tilgerring (16) übertragbar ist, wobei
zwei in Umfangsrichtung (Um) der Tilgereinrichtung (10) direkt zueinander benachbart angeordnete Tilgermassen (14) mittels einer Feder (100) mechanisch gekoppelt sind, **dadurch gekennzeichnet, dass**
• die Feder (100) in ihrem Mittenbereich (104) an/in der Tilgereinrichtung (10) aufgehängt oder gelagert ist,
• der Tilgerflansch (12) eine Aufhängung (124) oder ein Lager (124) aufweist, mittels welcher oder welchem die Feder (100) am/im Tilgerflansch (12) aufgehängt oder gelagert ist, und/oder
• an/auf/in einer/der Aufhängung (124) oder an/auf/in einem/dem Lager (124) die Feder (100) mechanisch vorgespannt in der Tilgereinrichtung (10) eingerichtet ist.

2. Tilgereinrichtung (10) gemäß vorhergehendem Anspruch, **dadurch gekennzeichnet, dass** die Tilgereinrichtung (10) derart ausgebildet ist, dass paarweise, immer nur zwei in Umfangsrichtung (Um) direkt zueinander benachbart angeordnete Tilgermassen (14) mittels einer Feder (100) mechanisch gekoppelt sind, und/oder
die Feder (100) derart dimensioniert und die Tilgereinrichtung (10) derart ausgebildet ist, dass die zwei betreffenden, direkt zueinander benachbart angeordneten Tilgermassen (14) in einer Ruhelage der Tilgereinrichtung (10), mittels der Feder (100) mechanisch vorgespannt in der Tilgereinrichtung (10) eingerichtet sind.

3. Tilgereinrichtung (10) gemäß einem der vorhergehenden Ansprüche, **dadurch gekennzeichnet, dass** die Feder (100) derart dimensioniert und derart in der Tilgereinrichtung (10) eingerichtet sowie die Tilgereinrichtung (10) derart ausgebildet ist, dass die Feder (100) die Tilgermassen (14) radial (Ra) nach außen drückt und/oder ein Herunterfallen der Tilgermassen (14) bei vergleichsweise geringen Drehzahlen vermieden ist.

4. Tilgereinrichtung (10) gemäß einem der vorhergehenden Ansprüche, **dadurch gekennzeichnet, dass** die Aufhängung (124) oder das Lager (124) des Tilgerflanschs (12) als ein Radialfortsatz des Tilgerflanschs (12) ausgebildet ist, wobei die Feder (100) mit ihrem Mittenbereich (104) bevorzugt an einer radialen (Ra) Außenseite des Radialfortsatzes ansitzt, und/oder
in Umfangsrichtung (Um) von einem ungebundenen Endabschnitt einer Tilgermasse (14) kommend, die Feder (100) räumlich vor einer mechanischen und/oder gelenkigen Koppelung der betreffenden Tilgermasse (14) mit dem Tilgerflansch (12), mit der Feder (100) mechanisch und/oder gelenkig gekoppelt ist.

5. Tilgereinrichtung (10) gemäß einem der vorhergehenden Ansprüche, **dadurch gekennzeichnet, dass** an wenigstens einem Längsendabschnitt (102) der Feder (100) eine Lagerfläche für eine/die gelenkige Koppelung mit einer Tilgermasse (14) vorgesehen ist, und/oder
die Feder (100) bevorzugt als eine einlagige Biegefeder (100) ausgebildet ist, wobei ein jeweiliger Längsendabschnitt (102) der Feder (100) gelenkig mit der dort befindlichen betreffenden Tilgermasse (14) gekoppelt ist.

6. Tilgereinrichtung (10) gemäß einem der vorhergehenden Ansprüche, **dadurch gekennzeichnet, dass**:
• eine/die mechanische Koppelung der Feder (100) mit einer Tilgermassen (14) mittels eines/des Gelenks (140), insbesondere eines Drehgelenks (140), erfolgt,
• eine Drehachse (Ax) des Drehgelenks (140) in Axialrichtung (Ax) der Tilgereinrichtung (10) verläuft,
• die Lagerfläche des Gelenks (140) in dieselbe Richtung (Um/-Um) wie die Feder (100) oder Biegefeder (100) gekrümmt ist,
• die Lagerfläche des Gelenks (140) und die Feder (100) oder Biegefeder (100) in einander entgegengesetzte Richtungen (Um, -Um) gekrümmt sind, und/oder
• die Feder (100) derart ausgelegt ist, dass sie in der Ruhelage der Tilgereinrichtung (10) wenigstens die Gewichtskraft der beiden an ihr angekoppelten Tilgermassen (14) abstützt.

7. Tilgereinrichtung (10) gemäß einem der vorhergehenden Ansprüche, **dadurch gekennzeichnet, dass** die Tilgermassen (14) in Radialrichtung (Ra) der Tilgereinrichtung (10) schwenkbar am Tilgerflansch (12) gelagert sind, und/oder
die Tilgereinrichtung (10) derart ausgebildet ist, dass der Tilgerring (12) bei einer Bewegung der Tilgermassen (14) in Radialrichtung (Ra), eine Relativdrehbewegung (Um) gegenüber dem Tilgerflansch (12) durchführt.

8. Tilgereinrichtung (10) gemäß einem der vorhergehenden Ansprüche, **dadurch gekennzeichnet, dass** die Tilgermassen (14) als Tilgerschwingen (12) ausgebildet sind, wobei jeweils eine einzelne Tilgerschwinge (12) lediglich mit einem einzigen Umfangsendabschnitt mit dem Tilgerflansch (12) mechanisch gekoppelt ist, und/oder diese Tilgerschwinge (12) abseits dieses Umfangsendabschnitts mit dem Tilgerring (16) mechanisch gekoppelt ist.

9. Drehmomentübertragungseinrichtung (1), Getriebe (1), Kupplung (1) oder Dämpfer (1) für einen Antriebsstrang eines Fahrzeugs, insbesondere eines Kraftfahrzeugs, **dadurch gekennzeichnet, dass**
die Drehmomentübertragungseinrichtung (1), das Getriebe (1), die Kupplung (1) oder der Dämpfer (1) eine Tilgereinrichtung (10) nach einem der vorhergehenden Ansprüche aufweist.

## Claims

1. A vibration absorber device (10) for a torque transmission device (1) for a drive train of a vehicle, in particular a motor vehicle, having
an absorber flange (12), an absorber ring (16) and a plurality of absorber masses (14), by means of which the absorber ring (12) is mechanically coupled to the absorber flange (12) and whereby a rotary movement (Um) is transmissible from the absorber flange (12) to the absorber ring (16), wherein
two absorber masses (14) arranged directly adjacent to one another in the circumferential direction (Um) of the vibration absorber device (10) are mechanically coupled by means of a spring (100), **characterised in that**
• the spring (100) is suspended or supported in its central region (104) on/in the vibration absorber device (10),
• the absorber flange (12) has a suspension (124) or a bearing (124) by means of which the spring (100) is suspended or supported on/in the absorber flange (12), and/or
• the spring (100) is configured mechanically preloaded in the vibration absorber device (10) on/in a/the suspension (124) or a/the bearing (124).

2. The vibration absorber device (10) according to the preceding claim, **characterised in that** the vibration absorber device (10) is designed such that, in pairs, only two absorber masses (14) arranged directly adjacent to one another in the circumferential direction (Um) are ever mechanically coupled by means of a spring (100), and/or
the spring (100) is dimensioned such that, and the vibration absorber device (10) is designed such that, the two relevant absorber masses (14) arranged directly adjacent to one another are configured mechanically preloaded in the vibration absorber device (10) by means of the spring (100) in a rest position of the vibration absorber device (10).

3. The vibration absorber device (10) according to one of the preceding claims, **characterised in that** the spring (100) is dimensioned and configured in the vibration absorber device (10) such that, and the vibration absorber device (10) is designed such that, the spring (100) presses the absorber masses (14) radially (Ra) outwards and/or the absorber masses (14) are prevented from falling down at comparatively low speeds.

4. The vibration absorber device (10) according to one of the preceding claims, **characterised in that** the suspension (124) or the bearing (124) of the absorber flange (12) is designed as a radial extension of the absorber flange (12), wherein the spring (100) with its central region (104) is preferably seated on a radial (Ra) outer side of the radial extension, and/or
in the circumferential direction (Um) from an unbound end section of an absorber mass (14), the spring (100) is spatially coupled to the spring (100) in a mechanical and/or articulated manner prior to a mechanical and/or articulated coupling of the respective absorber mass (14) to the absorber flange (12).

5. The vibration absorber device (10) according to one of the preceding claims, **characterised in that** a bearing surface for an/the articulated coupling with an absorber mass (14) is provided on at least one longitudinal end section (102) of the spring (100), and/or
the spring (100) is preferably designed as a single-layer leaf spring (100), wherein a respective longitudinal end section (102) of the spring (100) is coupled in an articulated manner to the relevant absorber mass (14) located there.

6. The vibration absorber device (10) according to one of the preceding claims, **characterised in that**:
• a/the mechanical coupling of the spring (100) to an absorber mass (14) is achieved by means of a/the joint (140), in particular a swivel joint (140),
• an axis of rotation (Ax) of the swivel joint (140) runs in the axial direction (Ax) of the vibration absorber device (10),
• the bearing surface of the joint (140) is curved in the same direction (Um/-Um) as the spring (100) or leaf spring (100),
• the bearing surface of the joint (140) and the spring (100) or leaf spring (100) are curved in opposite directions (Um, -Um), and/or
• the spring (100) is designed such that, in the rest position of the vibration absorber device (10), it supports at least the weight of the two absorber masses (14) coupled thereto.

7. The vibration absorber device (10) according to one of the preceding claims, **characterised in that** the absorber masses (14) are pivotably mounted on the absorber flange (12) in the radial direction (Ra) of the vibration absorber device (10), and/or
the vibration absorber device (10) is designed such that the absorber ring (12) performs a relative rotary movement (Um) with respect to the absorber flange (12) when the absorber masses (14) move in the radial direction (Ra).

8. The vibration absorber device (10) according to one of the preceding claims, **characterised in that** the absorber masses (14) are designed as absorber rockers (12), wherein an individual absorber rocker (12) is mechanically coupled to the absorber flange (12) only with a single peripheral end section, and/or said absorber rocker (12) is mechanically coupled to the absorber ring (16) away from this peripheral end section.

9. A torque transmission device (1), transmission (1), clutch (1) or absorber (1) for a drive train of a vehicle, in particular a motor vehicle, **characterised in that**
the torque transmission device (1), the transmission (1), the clutch (1) or the absorber (1) has a vibration absorber device (10) according to one of the preceding claims.

## Revendications

1. Dispositif amortisseur de vibrations (10) pour un dispositif de transmission de couple (1) pour un groupe motopropulseur d'un véhicule, en particulier d'un véhicule automobile, comprenant
une bride d'amortisseur (12), une bague d'amortisseur (16) et une pluralité de masses d'amortisseur (14), au moyen desquelles la bague d'amortisseur (12) est accouplée mécaniquement à la bride d'amortisseur (12) et moyennant quoi un mouvement de rotation (Um) de la bride d'amortisseur (12) peut être transmis à la bague d'amortisseur (16), dans lequel
deux masses d'amortisseur (14) disposées directement l'une à côté de l'autre dans la direction périphérique (Um) du dispositif amortisseur (10) sont accouplées mécaniquement au moyen d'un ressort (100), **caractérisé en ce que**
• le ressort (100) est suspendu ou logé dans sa zone centrale (104) sur/dans le dispositif amortisseur (10),
• la bride d'amortisseur (12) présente une suspension (124) ou un palier (124) au moyen de laquelle ou duquel le ressort (100) est suspendu ou logé sur/dans la bride d'amortisseur (12) et/ou
• le ressort (100) est monté mécaniquement précontraint dans le dispositif amortisseur (10) au niveau de/sur/dans une/la suspension (124) ou au niveau de/sur/dans un/le palier (124).

2. Dispositif amortisseur de vibrations (10) selon la revendication précédente, **caractérisé en ce que** le dispositif amortisseur de vibrations (10) est conçu de telle sorte que, par paires, seules deux masses d'amortisseur (14) disposées directement l'une à côté de l'autre dans la direction périphérique (Um) soient accouplées mécaniquement au moyen d'un ressort (100) et/ou
le ressort (100) est dimensionné de telle manière et le dispositif amortisseur de vibrations (10) est conçu de telle sorte que les deux masses d'amortisseur (14) correspondantes disposées directement l'une à côté de l'autre soient montées dans le dispositif amortisseur (10) mécaniquement précontraintes au moyen du ressort (100) dans une position de repos du dispositif amortisseur de vibrations (10).

3. Dispositif amortisseur de vibrations (10) selon l'une quelconque des revendications précédentes, **caractérisé en ce que** le ressort (100) est dimensionné et monté dans le dispositif amortisseur de vibrations (10) et le dispositif amortisseur de vibrations (10) est conçu de telle sorte que le ressort (100) pousse radialement (Ra) vers l'extérieur les masses d'amortisseur (14) et/ou les masses d'amortisseur (14) soient empêchées de tomber à des vitesses de rotation relativement faibles.

4. Dispositif amortisseur de vibrations (10) selon l'une quelconque des revendications précédentes, **caractérisé en ce que** la suspension (124) ou le palier (124) de la bride d'amortisseur (12) est conçu(e) comme un prolongement radial de la bride d'amortisseur (12), le ressort (100) reposant avec sa zone centrale (104) de préférence sur un côté extérieur radial (Ra) du prolongement radial et/ou
dans la direction périphérique (Um), à partir d'un segment d'extrémité non lié d'une masse d'amortisseur (14), le ressort (100) est accouplé mécaniquement et/ou de manière articulée avec le ressort (100) spatialement avant un accouplement mécanique et/ou articulé de la masse d'amortisseur (14) concernée avec la bride d'amortisseur (12).

5. Dispositif amortisseur de vibrations (10) selon l'une quelconque des revendications précédentes, **caractérisé en ce qu'**une surface d'appui pour un/l'accouplement articulé avec une masse d'amortisseur (14) est prévue sur au moins un segment d'extrémité longitudinal (102) du ressort (100) et/ou
le ressort (100) est de préférence réalisé sous la forme d'un ressort de flexion monocouche (100), un segment d'extrémité longitudinal (102) respectif du ressort (100) étant accouplé de manière articulée à la masse d'amortisseur (14) correspondante qui s'y trouve.

6. Dispositif amortisseur de vibrations (10) selon l'une des revendications précédentes, **caractérisé en ce que** :
• le ressort (100) est accouplé mécaniquement à une masse d'amortissement (14) au moyen d'une/de l'articulation (140), en particulier d'un pivot (140),
• un axe de rotation (Ax) du pivot (140) s'étend dans la direction axiale (Ax) du dispositif amortisseur de vibrations (10),
• la surface d'appui de l'articulation (140) est courbée dans la même direction (Um/-Um) que le ressort (100) ou le ressort de flexion (100),
• la surface d'appui de l'articulation (140) et le ressort (100) ou ressort de flexion (100) sont courbés dans des directions opposées (Um, -Um) et/ou
• le ressort (100) est conçu de telle sorte qu'en position de repos du dispositif amortisseur de vibrations (10) il supporte au moins le poids des deux masses d'amortissement (14) qui lui sont accouplées.

7. Dispositif amortisseur de vibrations (10) selon l'une quelconque des revendications précédentes, **caractérisé en ce que** les masses d'amortisseur (14) sont montées pivotantes sur la bride d'amortisseur (12) dans la direction radiale (Ra) du dispositif amortisseur de vibrations (10) et/ou
le dispositif amortisseur de vibrations (10) est conçu de telle sorte que la bague d'amortisseur (12) exécute un mouvement de rotation relatif (Um) par rapport à la bride d'amortisseur (12) lorsque les masses d'amortisseur (14) se déplacent dans la direction radiale (Ra).

8. Dispositif amortisseur de vibrations (10) selon l'une quelconque des revendications précédentes, **caractérisé en ce que** les masses d'amortisseur (14) sont réalisées sous forme de bascules d'amortisseur (12), une seule bascule d'amortisseur (12) étant accouplée mécaniquement à la bride d'amortisseur (12) uniquement avec un seul segment d'extrémité périphérique et/ou cette bascule d'amortisseur (12) est accouplée mécaniquement à la bague d'amortisseur (16) à distance de ce segment d'extrémité périphérique.

9. Dispositif de transmission de couple (1), transmission (1), embrayage (1) ou amortisseur (1) pour un groupe motopropulseur d'un véhicule, en particulier d'un véhicule automobile, caractérisé(e) en ce que
le dispositif de transmission de couple (1), la transmission (1), l'embrayage (1) ou l'amortisseur (1) comporte un dispositif amortisseur de vibrations (10) selon l'une quelconque des revendications précédentes.
